Europäisches Patentamt

European Patent Office

Office européen des brevets

(19)

(11) Veröffentlichungsnummer: **0 002 186**
**B1**

# EUROPÄISCHE PATENTSCHRIFT

(12)

(45) Veröffentlichungstag der Patentschrift:
05.08.81

(21) Anmeldenummer: 78101167.1

(22) Anmeldetag: 17.10.78

(51) Int. Cl.³: **B 01 J 3/04**, F 16 J 13/12 //
G01N31/12, G01N33/02

(54) **Druckaufschlussvorrichtung.**

(30) Priorität: 28.11.77 DE 2753019

(43) Veröffentlichungstag der Anmeldung:
13.06.79 Patentblatt 79/12

(45) Bekanntmachung des Hinweises auf die Patenterteilung:
05.08.81 Patentblatt 81/31

(84) Benannte Vertragsstaaten:
**BE CH FR GB NL**

(56) Entgegenhaltungen:
**DE-A-2 034 911**
**FR-A-2 167 500**
**FR-A-2 260 037**

(73) Patentinhaber: **SIEMENS AKTIENGESELLSCHAFT Berlin
und München, Postfach 22 02 61, D-8000 München 22 (DE)**

(72) Erfinder: **Scheubeck, Egmont, Dresdener Strasse 14 b,
D-8520 Erlangen (DE)**
Erfinder: **Gehring, Johann, Hohe Warte 2,
D-8521 Spardorf b. Erlangen (DE)**

ACTORUM AG.

## Druckaufschlussvorrichtung

Zur analytischen Bestimmung von Elementspuren, insbesondere zur Erfassung von Metallspuren in Biomaterialien, beispielsweise Lebensmitteln, wird nach einem vorgeschlagenen Verfahren eine grössere Menge an Probenmaterial, z. B. 25 g Fleisch, bei einer Verbrennung in Sauerstoff unter Druck in kurzer Zeit aufgeschlossen (DE-A-2 605 560). Für eine rasche Durchführung dieses Verfahrens ist ein einfach zu bedienendes Druckaufschlussgefäss, das sich vor allem schnell und bequem öffnen bzw. schliessen lässt, besonders günstig.

Handelsübliche Laborautoklaven, mit einem Fassungsvermögen von z. B. 1,5 l, erfordern ohne eine aufwendige mechanische Ausrüstung etwa jeweils 15 bis 20 Minuten zum Öffnen bzw. Schliessen des Gerätes. Dabei muss eine grössere Anzahl von Verschlussmuttern ab- bzw. angeschraubt werden. Ausserdem ist der relativ schwere Deckel von Hand abzuheben bzw. aufzulegen. Für schnell und einfach zu öffnende bzw. zu schliessende Autoklaven ist anderseits eine aufwendige mechanische Ausrüstung erforderlich, wie z. B. pneumatisch oder elektrisch angetriebene Vorrichtungen.

Aus der DE-A-2 034 911 sind Reaktionsdruckbehälter bekannt, bei denen wenigstens ein Paar von Druckbehältern zwischen mehreren Stationen hin und her bewegt wird, wobei das Kopfgerüst eine bewegbare Deckplatte und eine getrennte Verschlussvorrichtung, beispielsweise Keilblöcke, aufweist, durch welche die Deckplatte, in der sich mit Ventilen versehene Öffnungen befinden, mit dem unterhalb des Kopfgerüstes fluchtend ausgerichteten Behälter verbunden werden kann.

Der Erfindung liegt die Aufgabe zugrunde, eine Druckaufschlussvorrichtung zu schaffen, welche, soweit es das unverzügliche Schliessen und Öffnen der Druckaufschlussvorrichtung bzw. des Druckaufschlussgerätes betrifft, nicht mit den Nachteilen der bekannten Einrichtungen behaftet ist. Dabei geht es insbesondere darum, mit konstruktiv einfachen und zuverlässig wirkenden Mitteln und ohne aufwendige Zusatzausrüstungen ein einwandfreies Verschliessen und zuverlässiges und schnelles Öffnen nach Beendigung des Aufschlusses zu gewährleisten.

Diese Aufgabe wird mit einer Druckaufschlussvorrichtung gelöst, bei der erfindungsgemäss der Verschluss eines auf einer Grundplatte 10 im Abstand über dieser festmontierten Druckaufschlussgefässes 1 als leicht beweglicher Deckellaufwagen 15 mit einer unteren Druckaufnahmeplatte 4 und einer oberen Druckaufnahmeplatte 5, welche mit Dehnschrauben 7 und Distanzhülsen 6 verbunden sind und mit einer Verschlussmutter 8 ausgebildet ist. Es wird bei einem Axialhub von 1 mm ein druckdichter Verschluss eines Druckaufschlussgefässes mit der oberen Druckaufnahmeplatte erreicht. Die Verschlussmutter 8 hat ein Gewinde mit grosser Steigung, vorzugsweise 4 mm, und sie ist grossflächig.

Zweckmässig ist ein Axialhub von 1 mm bei einer Drehbewegung von 45°. Eine grossflächige Geometrie der Verschlussmutter verhindert bereits ein Öffnen bei einem niedrigen Innendruck (3 bar). Der Verschluss ist selbstblockierend und stellt somit einen echten Sicherheitsverschluss dar.

Mit einer Vorrichtung gemäss der Erfindung kann ein Druckaufschlussgefäss in wenigen Sekunden geöffnet bzw. verschlossen werden. Ein weiterer Vorteil ist darin zu sehen, dass bereits durch eine geringe Verdrehung der Verschlussmutter 8 ein druckdichter Verschluss des Druckbehälters erreicht wird. Öffnungs- und Schliessvorgänge des Verschlussmechanismus sind nicht von besonderen Betätigungsorganen abhängig. Die erfindungsgemässe Vorrichtung ist in ihrem Aufbau ausserordentlich einfach, in ihrer Wirkungsweise jedoch unbedingt zuverlässig und fehlerfrei.

Nach einem weiteren Merkmal der Erfindung weist das Druckgefäss 1 einen O-Ring 9 und einen Stützring 12 auf, wobei durch die aus der Zeichnung ersichtliche Anordnung derselben beim Schliessen eine besonders druckfeste gasdichte und im druckfreien Zustand leicht zu öffnende Abdichtung erreicht wird. Wird der Laufwagen 15 so verschoben, dass das Druckaufschlussgefäss 1 mittig zwischen den beiden Druckaufnahmeplatten 4 und 5 steht, so erfolgt durch Verdrehen der Verschlussschraube 8 um etwa 45° mittels O-Ring 9 und Stützring 12 ein druckdichter Verschluss.

Gemäss einer bevorzugten Ausführungsform ist das Druckaufschlussgefäss 1 mit zwei Stativstangen 2, 3 über zwei Lagerböcke 11 auf der Grundplatte 10 fest montiert.

Die obere bzw. untere Druckaufnahmeplatte des als Wagen ausgeführten Deckels kann über bzw. unter den starr befestigten Druckbehälter geschoben werden. Die Druckbelastung auf den Druckbehälter wird über die obere Druckaufnahmeplatte mit der Verschlussschraube und die untere Druckaufnahmeplatte auf die Dehnschrauben und die Distanzhülsen übertragen. Der Einsatz von wenigen, vorzugsweise vier Dehnschrauben und Distanzhülsen ist zweckmässig.

Mit einer Vorrichtung, deren Deckellaufwagen 15 eine kompakte Einheit aus einer unteren Druckaufnahmeplatte, einer oberen Druckaufnahmeplatte, vier Dehnschrauben mit Muttern und vier Distanzhülsen bildet, wird ein besonders gasdichter Verschluss erreicht.

Die Zeichnungen zeigen eine beispielsweise Ausführungsform der erfindungsgemässen Vorrichtung.

Es zeigt

Fig. 1 einen Längsschnitt einer Druckaufschlussvorrichtung im geschlossenen Zustand,

Fig. 2 einen Längsschnitt einer Druckaufschlussvorrichtung im offenen Zustand,

Fig. 3 eine Draufsicht der erfindungsgemässen Vorrichtung im geschlossenen Zustand gemäss Fig. 1,

Fig. 4 eine Draufsicht der erfindungsgemässen Vorrichtung im offenen Zustand gemäss Fig. 2.

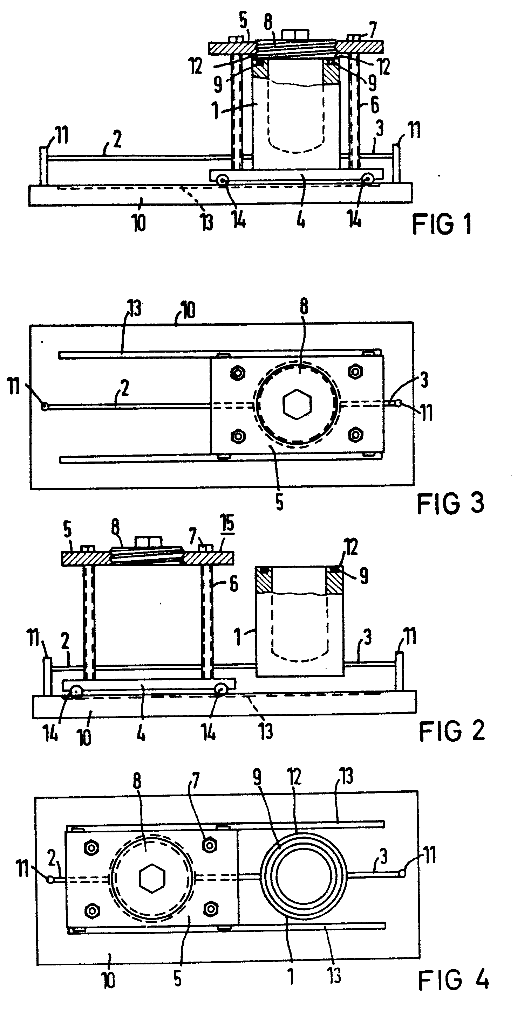

Die in den Fig. 1 und 2 dargestellte Druckaufschlussvorrichtung besteht aus einem Druckaufschlussgefäss 1, das mit den Stativstangen 2, 3 über zwei Lagerböcke 11 fest mit der Grundplatte 10 verbunden ist. Der auf Rollen 14 bewegliche Deckellaufwagen 15 bestehend aus einer unteren Druckaufnahmeplatte 4, einer oberen Druckaufnahmeplatte 5, vier Dehnschrauben mit Muttern 7 und vier Distanzhülsen 6 stellt eine kompakte Einheit dar. In der oberen Druckplatte 5 befindet sich die Verschlussmutter 8 mit einer Gewindesteigung von 4 mm. Mit 13 ist die Führungsnut für den Deckellaufwagen bezeichnet. Ein O-Ring 9 ist in einen Stützring 12 eingelegt, um einen besonders druckdichten und gleichzeitig im druckfreien Zustand leicht zu öffnenden Verschluss zu erreichen. Die einzelnen Teile der Vorrichtung können aus hochlegiertem Stahl bestehen.

Das dargestellte Ausführungsbeispiel ist zum Aufschluss von Fleischproben (Einwaage ca. 25 g) für die analytische Erfassung von Metallspuren bestimmt. Die Vorrichtung ist in gleicher Weise zum Aufschluss von Organproben wie z. B. Leber, Niere, Lunge und anderen beliebigen Nahrungsmitteln wie z. B. Fetten, Ölen, Hülsenfrüchten und Molkereiprodukten für die Spurenanalysen von Metallen wie z. B. Hg, As, Pb und Cd geeignet.

**Patentansprüche**

1. Druckaufschlussvorrichtung mit Schnellverschluss für den Aufschluss von Biomaterialien, dadurch gekennzeichnet, dass der Verschluss eines auf einer Grundplatte (10) im Abstand über dieser festmontierten Druckaufschlussgefässes (1) als leicht beweglicher Deckellaufwagen (15) mit einer unteren Druckaufnahmeplatte (4) und einer oberen Druckaufnahmeplatte (5), welche mit Dehnschrauben (7) und Distanzhülsen (6) verbunden sind und einer grossflächigen Verschlussmutter (8) mit einem Gewinde grosser Steigung ausgebildet ist.

2. Druckaufschlussvorrichtung nach Anspruch 1, dadurch gekennzeichnet, dass das Druckaufschlussgefäss (1) mit zwei Stativstangen (2, 3) über zwei Lagerblöcke (11) auf der Grundplatte (10) fixiert ist.

3. Druckaufschlussvorrichtung nach Anspruch 1 oder 2, dadurch gekennzeichnet, dass vier Distanzhülsen (6) und vier Dehnschrauben (7) mit Muttern vorhanden sind.

4. Druckaufschlussvorrichtung nach Anspruch 1, dadurch gekennzeichnet, dass vier Distanzhülsen (6) im Abstand von unterer Druckaufnahmeplatte (4) und oberer Druckaufnahmeplatte (5) angeordnet und die untere Druckaufnahmeplatte (4) und die obere Druckaufnahmeplatte (5) durch vier Dehnschrauben mit Muttern (7) zusammengehalten sind.

5. Druckaufschlussvorrichtung nach Anspruch 1, dadurch gekennzeichnet, dass das Druckaufschlussgerät (1) einen O-Ring (9) und einen Stützring (12) aufweist.

**Claims**

1. Pressure decomposition apparatus for the decomposition of biomaterials, having a quick-action closure means, characterised in that the closure means of a pressure decomposition container (1), which is mounted on but spaced from a base plate (10), is in the form of a readily-movable closure member travelling carriage (15) having a lower pressure absorbing plate (4) and an upper pressure absorbing plate (5) which are interconnected by extension screws (7) and spacing sleeves (6), and provided with a closure nut (8) which has a large surface and a thread of high pitch.

2. Pressure decomposition apparatus as claimed in Claim 1, characterised in that the pressure decomposition container (1) is fixed to the base plate (10) by two supporting bars (2, 3) through two pedestals (11).

3. Pressure decomposition apparatus as claimed in Claim 1, characterised in that four spacing sleeves (6) and four extension screws (7) provided with nuts are present.

4. Pressure decomposition apparatus as claimed in Claim 1, characterised in that four spacing sleeves (6) are spaced from the lower pressure absorbing plate (4) and the upper pressure absorbing plate (5), and the lower pressure absorbing plate (4) and the upper pressure absorbing plate (5) are held together by four extension screws provided with nuts (7).

5. Pressure decomposition apparatus as claimed in Claim 1, characterised in that the pressure decomposition device (1) is provided with an O-ring (9) and a supporting ring (12).

**Revendications**

1. Appareil de décomposition sous pression de substances biologiques, à dispositif de fermeture rapide, caractérisé en ce que le dispositif de fermeture d'un récipient (1) de décomposition sous pression, monté fixe à une certaine distance du dessus d'un socle (10), est constitué d'un chariot (15) formant couvercle, facile à déplacer, ayant des plateaux d'appui inférieur (4) et supérieur (5) qui sont reliés entre eux par des vis (7) de dilatation et par des douilles (6) d'entretoisement, et d'un écrou (8) de fermeture ayant une grande surface et un filetage à grand pas.

2. Appareil de décomposition sous pression suivant la revendication 1, caractérisé en ce que le récipient (1) de décomposition sous pression est fixé au socle (10) par deux tiges (2, 3) de statif par l'intermédiaire de deux paliers (11).

3. Appareil de décomposition sous pression suivant la revendication 1 ou 2, caractérisé en ce qu'il y a quatre douilles (6) d'entretoisement et quatre vis (7) de dilatation avec écrous.

4. Appareil de décomposition sous pression suivant la revendication 1, caractérisé en ce que quatre douilles (6) d'entretoisement sont disposées à une certaine distance du plateau (4) inférieur d'appui et du plateau (5) supérieur d'appui et le plateau (4) inférieur d'appui et le plateau (5) supérieur d'appui sont maintenus ensemble par quatre vis de dilatation avec écrous (7).

5. Appareil de décomposition sous pression suivant la revendication 1, caractérisé en ce que le récipient (1) de décomposition sous pression présente un joint (9) torique et une bague (12) d'appui.

FIG 1

FIG 3

FIG 2

FIG 4